(19) **Europäisches Patentamt European Patent Office Office européen des brevets**

(11) **EP 3 480 522 B1**

(12) **FASCICULE DE BREVET EUROPEEN**

(45) Date de publication et mention de la délivrance du brevet:
**18.08.2021 Bulletin 2021/33**

(51) Int Cl.:
*F23G 5/027* (2006.01)    *F23G 5/10* (2006.01)
*F23G 5/30* (2006.01)    *B01J 8/00* (2006.01)
*F23G 5/44* (2006.01)

(21) Numéro de dépôt: **18204592.2**

(22) Date de dépôt: **06.11.2018**

(54) **SYSTEME DE DOSAGE ET D'INJECTION DE POUDRES EN PHASE DENSE PAR GRAVITE ET AEREE PAR UN GAZ**

SYSTEM ZUR DOSIERUNG UND INJEKTION VON DICHTPHASENPULVERS MIT SCHWERKRAFT, DURCH EIN GAS DURCHSETZT

SYSTEM FOR DOSING AND INJECTING DENSE PHASE POWDERS BY GRAVITY AND AERATED BY A GAS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.11.2017 FR 1760442**

(43) Date de publication de la demande:
**08.05.2019 Bulletin 2019/19**

(73) Titulaire: **Commissariat à l'Energie Atomique et aux Energies Alternatives**
**75015 Paris (FR)**

(72) Inventeurs:
• **MARCHAND, Muriel**
**38054 Grenoble cedex 09 (FR)**
• **PONS DE VINCENT, Philippe**
**38054 Grenoble cedex 09 (FR)**

(74) Mandataire: **Nony**
**11 rue Saint-Georges**
**75009 Paris (FR)**

(56) Documents cités:
**US-A- 3 366 282    US-A- 5 129 766**

**Description**

<u>Domaine technique</u>

La présente invention concerne le domaine des systèmes d'alimentation en poudres, plus précisément de dosage et d'injection de poudres en phase dense, c'est-à-dire avec peu ou pas de gaz porteur.

Elle concerne en particulier les poudres cohésives, telles que les poudres de bois, c'est-à-dire qu'elles ont une tendance naturelle à former spontanément des arches et des voutes.

L'invention a trait plus particulièrement à une application d'alimentation, de contenants pressurisés ou non, en poudres de charge de matière carbonée, telle que la biomasse, le charbon ou tout autre type de poudres comme un broyat de déchets... Les contenants à alimenter peuvent être avantageusement, des réacteurs de gazéification, ou d'autres systèmes de conversion thermochimique. Dans cette application, les débits massiques de solide peuvent être très variables, depuis quelques kilogrammes jusqu'à plusieurs tonnes par heure en conditions industrielles.

L'invention vise à améliorer de tels systèmes d'alimentation de poudres, notamment par un dosage fin, précis, stable et reproductible et une injection de poudre en phase dense qui conserve les caractéristiques du dosage.

Bien que décrite en référence principalement à l'application avantageuse de dosage et d'injection de poudres de biomasse, l'invention peut s'appliquer à tout type de poudres dont on connait les propriétés physiques et mécaniques (granulométrie, densité, taux d'humidité, angle d'avalanche...).

<u>Art antérieur</u>

Dans le domaine de l'alimentation en poudres de contenants divers et variés, on peut distinguer deux grandes catégories de dispositifs connus, ceux ayant une fonction de dosage des poudres, c'est-à-dire qui permettent de contrôler la quantité de poudre, et ceux servant à l'injection de poudres dans un contenant, en continu ou en discontinu.

De manière générale, un système à la fois de dosage et d'injection doit contrôler la quantité de poudre injectée pour pouvoir piloter l'installation pour laquelle la poudre est destinée et limiter la quantité de gaz de convoyage.

En effet, bon nombre systèmes de dosage et injection existants fonctionnent avec une injection de gaz, pour pressuriser et/ou transporter la poudre. Le document US 5 129 766 décrit une alimentation en poudre en mélange avec du gaz.

Ainsi, cette solution déjà connue, en particulier dans le domaine du convoyage et de la gazéification de poudre de charbon, consiste à contrôler le débit de solide par un débit additionnel de gaz. Un convoyage avec gaz, aussi désigné par « injection aérée », a pour avantage de ne pas générer d'encombrement supplémentaire.

En revanche, il génère un écoulement à phase fortement diluée, ce qui peut ne pas être compatible avec bon nombre de procédés en aval, notamment dans les procédés où interviennent des réactions thermochimiques à partir de la poudre injectée.

Par conséquent, il est intéressant de diminuer la quantité de gaz de convoyage, car ce gaz, inerte pour des raisons de sécurité, ne participe pas à la réaction thermochimique et entraine une diminution des rendements des réacteurs en aval. Ceci peut être notamment pénalisant à haute pression, du fait de la densité accrue du gaz, qui augmente les ratios entre débit de masse du gaz et débit de masse solide. Le rapport entre les quantités de solide et de gaz dans une section donnée d'un dispositif d'injection est représenté par la fraction volumique solide. Il convient donc de maximiser cette grandeur et de conserver un écoulement poudre/gaz en phase dense, c'est-à-dire avec des fractions volumiques solides supérieures à 15%.

Un dispositif de dosage et d'injection remplissant ces fonctions a été proposé par la Demanderesse dans la demande de brevet internationale déposée le 13 septembre 2017 sous le n° PCT/EP2017/072970. Ce dispositif d'injection permet de doser finement et d'injecter des poudres cohésives en mode gravitaire, sans adjonction de gaz.

Cependant, l'adjonction de gaz peut s'avérer avantageuse voire impérative dans certaines applications.

Par exemple, dans certaines applications de gazéification de biomasse, la chaleur est apportée par un brûleur à fonctionnement autothermique, c'est-à-dire un brûleur dans lequel une partie de la biomasse est utilisée comme carburant pour produire la flamme de combustion et une autre partie de la biomasse sert à la réaction de gazéification. Dans ce type de brûleur, il est impératif d'injecter la biomasse à des vitesses importantes, typiquement de l'ordre de 3 à 30 m/s. Cette contrainte de vitesse est liée au fonctionnement du brûleur ou du réacteur en aval. Cela est le cas par exemple pour éloigner la flamme du nez du brûleur et ainsi limiter l'échauffement de ses parois ou encore pour garantir une bonne homogénéité du jet de poudre...

L'adjonction de gaz peut ainsi être envisagée pour favoriser l'écoulement de poudres cohésives et augmenter leur vitesse en sortie de dispositif d'injection de poudre, afin d'atteindre les vitesses requises pour un brûleur autothermique.

Un flux de gaz remplit dans ce cas à la fois les fonctions d'aide à l'écoulement et d'accélération des particules de biomasse.

Or, comme indiqué précédemment, le débit de gaz doit être le plus faible possible pour ne pas diminuer le rendement de la réaction de gazéification.

Il existe donc un besoin de définir des dispositifs d'injection/soufflage de gaz qui soient performants permettant d'assurer à la fois :

- l'injection d'un débit stable et reproductif de biomasse,
- avec les vitesses les plus élevés possibles,
- en utilisant la quantité la plus faible possible de gaz.

Dans la littérature scientifique un très grand nombre de références existent sur l'aide par gaz à l'écoulement de poudres dans des systèmes d'injection.

Cependant, dans la plupart de ces références, il s'agit de réaliser une aération en régime -ou proche du régime-fluidisé : la poudre est ainsi mise en suspension, afin de casser d'éventuelles voutes et de favoriser son écoulement vers l'extérieur d'une trémie, conique ou non. L'injection de gaz est en général réalisée en contrecourant par rapport à l'écoulement descendant de poudre, donc en sens inverse de la gravité. Dans la plupart des systèmes, l'injecteur de poudre intègre le dispositif d'aération.

En ce qui concerne des applications d'injection plus localisée de gaz, on peut citer les articles [1], [2]. Dans ces publications, l'aide à l'écoulement granulaire se fait par une aération co-courante avec l'écoulement de poudre, vers le bas d'une trémie conique. L'injection de gaz est appliquée dans une zone très proche de la sortie de la trémie, typiquement de l'ordre d'une valeur égale à celle du diamètre de sortie. L'aération agit comme un lubrifiant sur les parois qui a pour effet de faciliter l'écoulement de poudre mais aussi d'augmenter considérablement son débit.

D'une manière générale, les inconvénients majeurs des dispositifs existants dans la littérature sont que :

- les débits de gaz sont importants, les fractions volumiques solides de la poudre sont donc faibles,
- le débit de solide est nécessairement contrôlé par le débit de gaz. Ces deux débits sont donc dépendants l'un de l'autre. Ceci impose des contraintes sur le débit de gaz, d'une part et d'autre part conduit à des instabilités du débit de solide.

Un autre inconvénient des dispositifs existants d'aération de poudre par gaz est qu'ils fonctionnent mal avec des poudres fortement cohésives et peu fluidisables.

Par ailleurs, le brevet US 3713564 divulgue un dispositif d'injection de gaz qui est inséré dans un cône d'injection de poudre. Ainsi, le dispositif permet de diriger l'écoulement granulaire vers le bas par des jets plans de gaz comprimé répartis sur le pourtour intérieur du cône. L'effet centrifuge créé par les jets augmente le débit de poudre mais nécessite une quantité de gaz importante. Cette solution présente le même inconvénient que celui des dispositifs précédents : le débit de poudre est nécessairement piloté par le débit de gaz.

Le brevet JP 2007091242 divulgue le même type de jets de gaz, mais ils sont ici circulaires et plus localisés. Des buses, ajoutées en partie haute et sur le périmètre d'un cône d'injection de poudre, créent un écoulement descendant poudre/gaz dans le cône.

Le brevet US 4943190 divulgue la mise en œuvre d'une canne d'injection de gaz, munie de trous et d'une chambre d'injection de gaz conique agencée à mi-hauteur de la canne. Cette canne est insérée dans un cône d'injection de poudre en vue de favoriser la décharge de la poudre vers un contenant situé en aval. Le flux de gaz peut être dirigé vers le bas, radialement ou encore vers le haut. La position de la canne d'injection est variable le long de l'axe vertical du cône, au cours de l'injection. Dans le même temps, une aération peut être réalisée par les parois du cône. Selon les auteurs de ce brevet US 4943190, l'ensemble de ces injections permet d'assurer un pilotage en temps réel de la quantité de poudre injectée vers l'aval. Or, cette solution rend encore le débit de poudre totalement dépendant du débit de gaz.

En conclusion, même si des dispositifs d'aide à l'écoulement d'un milieu granulaire, par adjonction/injection de gaz existent et sont couramment utilisés, ils présentent néanmoins les inconvénients majeurs suivants :

- ils nécessitent dans la plupart des cas une modification de la structure du dispositif d'injection de poudre,
- ils nécessitent une grande quantité de gaz et créent un écoulement à phase dispersé, la plupart du temps de type fluidisé,
- ils ne permettent pas l'indépendance entre le débit de gaz et le débit solide de poudre.

Autrement dit, ces dispositifs existants, ne comblent donc pas le besoin d'un dispositif d'injection/soufflage de gaz que l'on puisse rapporter dans un dispositif d'injection de poudre, qui soit simple, peu consommateur en gaz et qui permette de conserver, avec des vitesses de gaz les plus élevées possible, un écoulement de poudre en phase dense à un débit prédéfini et stable.

Le but de l'invention est de répondre au moins en partie à ces besoins.

Exposé de l'invention

Pour ce faire, l'invention concerne, sous un de ses aspects, un système d'alimentation en poudre en phase dense comportant :

- un dispositif de dosage, adapté pour doser la poudre selon un débit moyen donné;
- un dispositif d'injection de la poudre par gravité, sous la forme d'un tronc de cône, agencé en dessous du dispositif de dosage de sorte à recevoir par gravité la poudre dosée selon le débit moyen donné ;
- un tube de soufflage de gaz, le tube étant droit et présentant à son extrémité inférieure, soit un trou débouchant suivant son axe, soit une pluralité de trous débouchant radialement à l'axe du tube sensiblement à la même côte longitudinale de celui-ci; le tube droit étant agencé dans le tronc de cône avec son axe longitudinal X confondu avec celui du tronc de cône, de sorte à pouvoir injecter localement un gaz par le(s) trou(s) dans le débit de poudre tombant par gravité dans le cône d'injection.

Conformément à l'invention, un tube droit permet un soufflage local et préférentiellement axial tout en autorisant des vitesses locales de gaz importantes.

Le dosage peut être réalisé par un dispositif de dosage choisi parmi une vis, une écluse rotative ou encore un lock-hopper.

Le cône d'injection peut être avantageusement défini comme dans la demande de brevet précitée PCT/EP2017/072970.

Ainsi, dans le système selon l'invention, le débit de solide est contrôlé par un dispositif de dosage suivi d'un cône d'injection et le débit de gaz ajouté par le ou les trous du tube droit dans le cône est suffisamment faible pour ne pas influencer le débit de solide. On peut ainsi obtenir deux débits totalement indépendants et on peut minimiser le débit de gaz au moyen de l'optimisation du tube droit d'injection, sans pénaliser le débit de solide.

Pour optimiser le tube droit selon l'invention, la section de passage du ou des trous de soufflage de gaz est avantageusement minimisée de sorte à générer de grandes vitesses de gaz et donc également de poudre et un écoulement diphasique stable pour des quantités minimes de gaz injecté. Outre les vitesses importantes générées, le dispositif d'aide par soufflage de gaz selon l'invention améliore l'écoulement. Il est important de noter que le régime d'écoulement n'est pas fluidisé et le gaz injecté par le tube droit ne sert pas à mettre en suspension la poudre. L'écoulement du gaz injecté est co-courant avec celui de la poudre. Par conséquent, la cohésion d'une poudre ou sa faible aptitude à se fluidiser n'entravent pas le fonctionnement du système d'injection.

En réalisant des essais, les inventeurs ont pu mettre en évidence les gammes préférées de paramètres adimensionnels déduites de diamètre de trous et des zones de positionnement d'un tube droit dans le cône d'injection.

Ainsi, de préférence, le paramètre adimensionnel H* est compris entre 0,45 et 0,57, H* étant défini comme étant le rapport suivant :

$$H^* = \frac{C}{H},$$

dans lequel C est la côte du plan de sortie du trou de soufflage de gaz par rapport au plan de sortie du cône d'injection de poudre et H la hauteur du cône entre son ouverture d'entrée et celle de sortie.

De préférence encore, le paramètre adimensionnel R* est compris entre 4 et 40, R* étant défini comme étant le rapport suivant :

$$R^* = \frac{D^2}{d^2},$$

dans lequel D est le diamètre de sortie du cône d'injection de poudre et d le diamètre de trou axial de soufflage du gaz ou le diamètre équivalent de plusieurs trous radiaux de soufflage du gaz.

De préférence encore, le produit P* entre H* et R*, P* = H*. R*, est compris entre 2 et 20.

Selon la première alternative, le trou débouchant suivant l'axe du tube droit présente avantageusement un diamètre égal à celui intérieur du tube de soufflage.

Selon la deuxième alternative, le tube droit de soufflage de gaz comprend avantageusement trois trous équi-répartis angulairement à 120° l'un de l'autre.

L'invention a également pour objet, selon un autre de ses aspects, une installation de conversion thermochimique comprenant un réacteur de gazéification agencé en aval du système décrit précédemment.

L'installation est particulièrement destinée à convertir de la poudre de biomasse, le réacteur étant un réacteur de type à flux entraîné.

L'invention a également pour objet un procédé de fonctionnement d'un système précédemment décrit, comprenant les étapes suivantes :

a/ on amène une poudre dosée par le dispositif de dosage, dans le cône d'injection, de sorte à ce qu'elle tombe par gravité dans ce dernier ;

b/ on injecte simultanément à l'étape a/ depuis l'extérieur du cône, un gaz de soufflage, de préférence un gaz neutre, dans le tube droit de sorte que le gaz soit injecté en co-courant de la poudre qui tombe par gravité, soit selon l'axe du cône, soit radialement à ce dernier.

L'invention est particulièrement avantageuse à mettre en œuvre dans une installation de conversion thermochimique en réacteur à flux entraîné (RFE). En effet, dans ce type d'installation, il est nécessaire de garantir une très grande stabilité et reproductibilité du débit de poudre injectée, avec très peu d'ajout de gaz mais des vitesses gaz/particules élevées.

Description détaillée

D'autres avantages et caractéristiques de l'invention ressortiront mieux à la lecture de la description détaillée d'exemples de mise en œuvre de l'invention faite à titre illustratif et non limitatif en référence aux figures suivantes, parmi lesquelles :

- la figure 1 est une vue schématique d'un exemple de système d'alimentation en poudre en phase dense, avec un tube droit de soufflage de gaz selon l'invention;
- la figure 2 est vue en coupe longitudinale d'un exemple de dispositif d'injection avec cône d'injection de poudre logeant un tube de soufflage de gaz selon l'invention ;

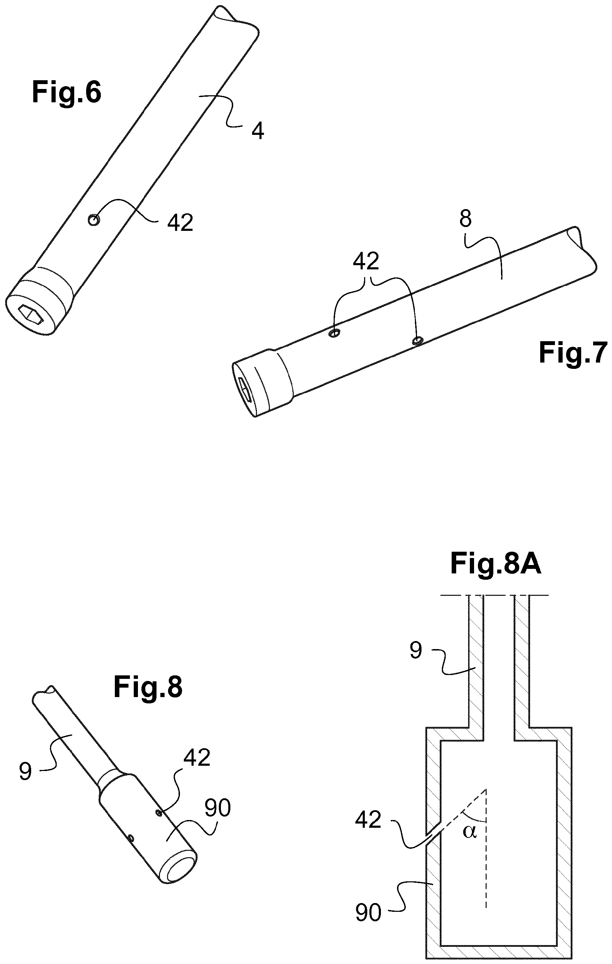

- les figures 3 à 8 sont des reproductions photographiques montrant différentes configurations de cannes de soufflage de gaz qui ont été testées afin de parvenir au tube droit d'injection conforme à l'invention ;
- la figure 8A est une vue en coupe longitudinale partielle au niveau d'une chambre de soufflage de gaz d'une canne selon la configuration de la figure 8 ;
- les figures 9 à 11 sont des images réalisées à l'aide d'un système de visualisation rapide par caméra, à la sortie d'un cône d'injection d'une poudre de hêtre sous l'effet d'injection d'un gaz neutre par un tube droit conforme à l'invention et ce, pour différents diamètres débouchant de celui-ci et à différents débits de soufflage de gaz.

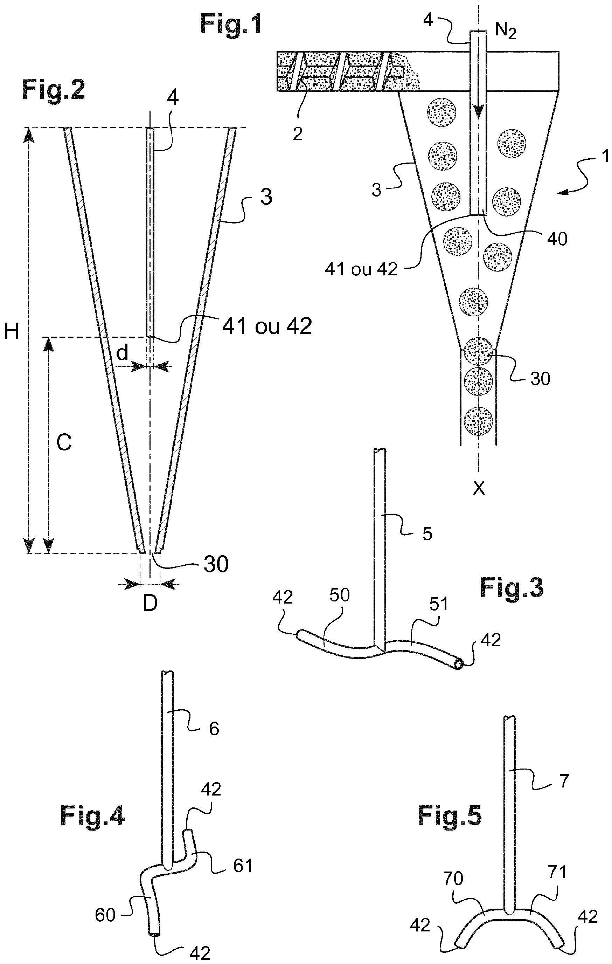

On précise ici dans l'ensemble de la présente demande, les termes « inférieur », « supérieur », « dessus », « dessous », « intérieur », « extérieur », « « interne » « externe» sont à comprendre par référence à un tronc de cône d'injection selon l'invention avec son axe agencé à la verticale avec l'entrée sur le dessus et la sortie sur le dessous.
On précise également que les termes « amont », « aval », « entrée », « sortie » sont à considérer par rapport au sens de circulation de la poudre dans le système selon l'invention.
Le système d'alimentation 1 en poudre en phase dense représenté en figure 1 comprend tout d'abord un dispositif de dosage 2 classique. Il peut s'agir d'une vis hélicoïdale comme schématisée en figure 1, d'une écluse rotative ou d'un sas de pressurisation.
En dessous du dispositif de dosage 2 est agencé un injecteur 3 sous la forme d'un tronc de cône d'injection d'axe de révolution X. L'agencement est tel que la poudre dosée en sortie du doseur 2 tombe par gravité directement dans le cône 3.
Selon l'invention, on agence à l'intérieur du tronc de cône 3, un tube droit 4 d'axe confondu avec celui du cône, et présentant à son extrémité inférieure 40, soit un trou débouchant 41 suivant son axe, soit une pluralité de trous 42 débouchant radialement à l'axe du tube sensiblement à la même côte longitudinale de celui-ci.
Le trou 41 débouchant axialement a de préférence le diamètre intérieur du tube droit 4.
Avec un tel tube d'injection 4, on peut avantageusement injecter localement un gaz neutre, comme par exemple de l'azote, comme schématisé en figure 1, par le(s) trou(s) 41 ou 42 dans le débit de poudre tombant par gravité dans le cône d'injection.
Le soufflage de gaz par le trou 41 est donc réalisé axialement selon l'axe du cône 3, tandis que le soufflage de gaz par les trous 42 se fait radialement à la même côte longitudinale du cône 3.
Pour valider la définition d'un tube droit 4 en tant que canne de soufflage la plus efficace, les inventeurs ont mené une campagne d'essais comparatifs avec d'autres configurations de cannes de soufflage qui diffèrent d'un tube droit selon l'invention.
Comme explicité ci-après, ces autres configurations de cannes diffèrent par la forme et la position du ou des trous de soufflage de gaz 41 ou 42 par rapport au cône d'injection de poudre.
Les essais ont été réalisés :

- sur une poudre de hêtre de granulométrie 0 à 200 $\mu$m et un taux d'humidité de l'ordre de 10% ;
- avec une injection d'azote $N_2$.

Le cône d'injection 3 utilisé lors des essais présente un diamètre de sortie D égal à 8 mm.

Un nombre de huit cannes d'injection de configurations avec formes différentes et à différentes positions de trous de soufflage a été comparé.

Les configurations N°1 et N°2 correspondent à des tubes droits 4 à un seul trou axial 41 en extrémité inférieure, dont le diamètre est celui intérieur du tube et respectivement égal à 1,3mm et 4mm.

La configuration N°3 est montré en figure 3 : la canne comprend dans son extrémité inférieure, une partie tubulaire droite 5 prolongée par deux branches identiques recourbées 50, 51 à la perpendiculaire de la partie droite, à l'extrémité inférieure de chacune desquelles débouche à la même côte P un trou 42 de diamètre égal à 4mm.

La configuration N°4 est montré en figure 4 : la canne comprend dans son extrémité inférieure, une partie tubulaire droite 6 prolongée par deux branches recourbées 60, 61 l'une vers le haut l'autre le bas, à l'extrémité inférieure de chacune desquelles débouche un trou 42 de diamètre égal à 4mm. On précise que pour cette configuration N°4 la côte P indiquée dans le tableau 1 ci-dessous est la moyenne des côtes des deux trous 42.

La configuration N°5 est montré en figure 5: la canne comprend dans son extrémité inférieure, une partie tubulaire droite 7 prolongée par deux branches identiques recourbées 70, 71 vers le bas, à l'extrémité inférieure de chacune desquelles débouche à la même côte P un trou 42 de diamètre égal à 4mm.

La configuration N°6 correspond à un tube droit 4 avec en extrémité inférieure trois trous 42 équi-répartis angulairement à 120° l'un de l'autre et débouchant radialement à la même côte P, avec un diamètre pour chaque trou égal à 1,5mm.

La configuration N°7 correspond à un tube droit 8 avec en extrémité inférieure trois trous 42 équi-répartis angulairement à 120° l'un de l'autre et débouchant à une côte décalée l'une par rapport à l'autre, avec un diamètre pour chaque trou égal à 1,5mm. On précise que pour cette configuration N°7 la côte P indiquée dans le tableau 1 ci-dessous est la moyenne des côtes des trois trous 42.

La configuration N°7 correspond à un tube droit 9 avec en extrémité inférieure une chambre 90 percée de trois trous 42 équi-répartis angulairement à 120° l'un de l'autre et débouchant radialement à la même côte P selon une inclinaison $\alpha$ de 30° par rapport à la verticale, avec un diamètre pour chaque trou égal à 1,1mm.

Pour chaque configuration, la position de la canne d'injection dans le cône d'injection 3, qui se traduit par la côte P, est un paramètre variable. Cette côte P a été ajustée par pas de 20 mm, afin de trouver le débit de gaz le plus faible permettant d'obtenir un écoulement de poudre à un débit de 50 kg/h, sans instabilités, ni blocage.

Pour parvenir aux résultats d'essais, les inventeurs ont mis en œuvre les méthodes et moyens de mesure ci-après.

Pour la pesée de la poudre de hêtre utilisée, un ensemble de trois pesons ou capteurs de pesage commercialisés sous la dénomination F60X100 par la société SCAIME. L'étalonnage de ces pesons a conduit à une incertitude de 0.005% de la mesure. Leur résolution est donnée par le constructeur à 27 grammes. Des tests ont montré une résolution effective de l'ordre de 45 grammes. Lors d'un essai, la poudre est pesée au cours du temps. La courbe de masse de poudre en fonction du temps est parfaitement linéaire, le débit est donc déduit de la pente du signal. Au débit cible de 50 Kg/h, la résolution de mesure des pesons limite la réponse en fréquence du système de pesée à 0,33 Hz environ.

La mesure du débit de l'azote soufflé/injecté a été faite par un débitmètre-régulateur commercialisé sous la dénomination 0151 par la société SERV 'INSTRUMENTATION. Ce débitmètre a été étalonné en azote sur la gamme de 0 à 10 Nm$^3$/h. La précision de mesure est donnée à 0,5 % du point de mesure.

Pour estimer la vitesse du gaz, un système de visualisation rapide a été utilisé. Il est constitué d'une caméra commercialisée sous la dénomination « PHOTRON FASTCAM SA3 », d'un objectif de la société NIKON de dénomination f105mm, d'un logiciel d'acquisition « PHOTRON FASTCAM VIEWER » et de deux projecteurs de lumière froide, de puissance maximale 575 W chacun, commercialisés par la société DEDOLIGHT. Ce système permet de filmer des phénomènes à des cadences de 2000 images par seconde plein format sur des champs de l'ordre de 5 cm x 5 cm avec un temps d'obturation de l'ordre du 15 000ème de seconde.

Le système est utilisé pour filmer le jet de poudre de la zone en sortie d'injecteur 3. La caméra utilisée bénéficie d'un accès optique à cette zone.

Les figures 9, 10 et 11 montrent des exemples d'images de poudre de hêtre de granulométrie moyenne 200 $\mu$m obtenues par ce système de vidéo rapide en sortie 30 d'un cône d'injection 3 selon un diamètre de sortie D respectivement égal à 16 et 8 mm et des débits d'azote de 1 Nm$^3$/h, 0,8 Nm$^3$/h et 0,3Nm$^3$/h.

La caméra peut également filmer le jet de gaz (sans injection de biomasse), des fines particules de biomasse, en phase très diluée étant alors utilisées comme traceurs passifs pour estimer la vitesse du gaz. Les méthodes employées pour déterminer les vitesses du gaz et des particules de poudre sont décrites ci-après.

Une méthode dite de PTV (acronyme anglais pour « Particle Tracking Velocimetry ») est appliquée aux particules de biomasse pour en déterminer la vitesse. Il s'agit ici de déterminer la composante axiale ou verticale du jet, l'axe X du cône 3 étant aligné avec la verticale.

A partir de la mesure du déplacement d'une particule de biomasse $\Delta X$ (en pixels) pendant le temps $\Delta t$ (en secondes), la vitesse instantanée de la particule est déduite par la relation :

$$V_s = \frac{\Delta X}{\Delta t}$$

La valeur moyenne de la vitesse verticale du jet de poudre est ensuite obtenue par une moyenne statistique des vitesses instantanées obtenues sur quelques dizaines de particules.

Pour chaque mesure, l'incertitude de mesure est calculée par la somme des erreurs sur $\Delta t$ et sur $\Delta X$. L'erreur relative sur $\Delta t$ est donnée par le constructeur à 1%. L'erreur absolue sur le déplacement $\Delta X$ est de l'ordre de 1 pixel. Les déplacements sont de l'ordre de la trentaine de pixels, ce qui conduit à une erreur relative de 3%. L'incertitude relative sur la vitesse des particules mesurée est donc de l'ordre de +/- 4%.

La moyenne V et l'écart type σ des fluctuations de vitesse verticale sont calculés sur quelques dizaines de points. L'erreur statistique absolue Es est déduite par la relation suivante :

$$\mathrm{Es} = \frac{\sigma}{\sqrt{N}}$$

où N est le nombre de points pris pour le calcul.

En pratique, les erreurs de convergence statistique obtenues sur les essais sont de l'ordre de 1%. On estime donc l'erreur totale sur la vitesse des particules à +/- 5%.

La même technique de PTV est appliquée aux cas sans injection de poudre, où seules les quelques particules présentes dans le champ sont utilisées comme traceur passif, pour la mesure de la vitesse axiale moyenne du gaz. Il est à noter ici qu'il ne s'agit pas de la vitesse du gaz en conditions diphasiques gaz/particules mais en conditions monophasiques.

La validation de la mesure de la vitesse axiale du gaz a été faite antérieurement sur un injecteur 3 de diamètre de sortie D, égal à 16 mm, par reconstruction et intégration du profil de vitesse afin de remonter au débit de gaz et par comparaison avec le débit mesuré par le débitmètre (débit de consigne).

La fraction volumique solide α est déterminée par un calcul analytique à partir des relations suivantes qui régissent l'écoulement :

$$\alpha = \frac{S_s}{S_{tot}} \ (1)$$

$$\dot{m}_g = \rho_g \cdot V_g \cdot S_g \ (2)$$

$$\dot{m}_s = \rho_s \cdot V_s \cdot S_s \ (3)$$

$$S_S + S_g = S_{tot} \ (4)$$

dans lesquelles :

- les indices utilisés s, g, tot, se rapportent respectivement au solide (poudre), au gaz et au total, c'est-à-dire au solide et au gaz ;
- les grandeurs considérées sont les surfaces en m$^2$ $S_s$, $S_g$, $S_{tot}$, les masses volumiques en Kg/m$^3$ ps, pg , pg à la pression atmosphérique et 0°C, les débits massiques en Kg/s $\dot{m}_s$, $\dot{m}_g$ avec $\dot{m}_g = \rho_{g(Pa,0°C)} \cdot Q_g(Nm^3/h)$ et $Q_g(m^3/s)$ = $\dot{m}_g/\rho_g$, et enfin les vitesses en m/s $V_s$, $V_g$.

On distingue deux cas.

Le premier cas où α est déduite des mesures de débit solide et de vitesses de particules.

$$\alpha = \frac{\dot{m}_s}{\rho_s \cdot V_s \cdot S_{tot}}$$

A partir des équations (1) et (3), on a

On peut donc estimer α pour chaque configuration de mesure avec Vs.

Le deuxième cas, plus général, où on veut une estimation théorique de α pour un injecteur 3 de diamètre de sortie D donné, un débit de solide et un débit de gaz donnés.

Le calcul est détaillé ci-dessous.

A partir des équations (1) et (3), on a $\alpha = \dfrac{\dot{m}_s}{\rho_s \cdot V_s \cdot S_{tot}}$

A partir des équations (3) et (4), on a $S_g = S_{tot} \cdot (1 - \alpha)$

A partir de l'équation (2), on a $V_g = \dfrac{\dot{m}_g}{\rho_g \cdot S_g}$

A partir de l'équation (1), on $S_s = \alpha \cdot S_{tot}$

A partir des équations (2) et (3), on a : $\dfrac{\dot{m}_s}{\dot{m}_g} = \dfrac{\rho_s \cdot S_s}{\rho_g \cdot S_g}$

Et des équations (1), (3) et (4) : $\dfrac{S_s}{S_g} = \dfrac{\alpha}{1-\alpha}$

D'où : $\dfrac{\dot{m}_s}{\dot{m}_g} = \dfrac{\rho_s}{\rho_g} \cdot \left(\dfrac{\alpha}{1-\alpha}\right)$

Soit $A = \dfrac{\dot{m}_s}{\dot{m}_g} \cdot \dfrac{\rho_g}{\rho_s}$ et $\alpha = \dfrac{1}{1+A}$

A partir des équations (1), (2) et (4), on a $S_g = \dfrac{S_s}{A}$

Le tableau 1 ci-après résume les résultats des essais en fonction de chacune des configurations précités, à savoir la détermination du débit minimal de gaz soufflé, la côte P de la canne d'injection correspondante, la vitesse du gaz en sortie de trous de soufflage et enfin la fraction volumique de la poudre correspondante.

**TABLEAU 1**

| Configurations N° | Débit minimal de gaz injecté (Nm³/h) | Côte P de positionnement des trous d'injection 41 ou 42 par rapport à l'ouverture de sortie 30 du cône 3 (mm) | Vitesse minimale en sortie des trous d'injection 41 ou 42 (m/s) | Fraction volumique solide minimale dans le cône 3 (%) |
|---|---|---|---|---|
| 1 | 0,4 | 150 | 90 | 20 |
| 2 | 0,6 | 165 | 15 | 13 |
| 3 | 0,8 | 200 | 10 | 9 |
| 4 | 0,8 | 235 | 10 | 9 |
| 5 | 0,8 | 235 | 10 | 9 |
| 6 | 0,6 | 130 | 35 | 13 |
| 7 | 0,9 | 265 | 50 | 7 |
| 8 | 0,8 | 160 | 87 | 9 |

De ce tableau 1, on en conclue que les configurations qui ont permis d'obtenir le débit de gaz le plus faible sont les configurations N° 1, 2 et 6 et plus particulièrement la configuration N°1.

Les configurations N°3, 4 et 5, qui visent à créer un effet de rotation de l'écoulement, s'avèrent moins efficaces. L'efficacité de ces configurations est probablement limitée par l'encombrement de ce type de géométrie, qui ne permet pas de les installer en partie basse d'injecteur 3, ainsi que par le caractère non local du mode de soufflage de gaz. C'est aussi le cas des configurations 7 et 8.

L'avantage des tubes droits 4 en tant que canne d'injection est que leur faible encombrement permet de les installer plus bas dans le cône d'injecteur 3, afin d'avoir la meilleure efficacité de soufflage.

En ce qui concerne la vitesse du gaz en sortie d'ouverture 30 de cône 3, les configurations N°1, 2 et 6 montrent qu'il est préférable d'avoir des vitesses importantes de gaz, mais que cela n'est pas l'unique paramètre. En effet, dans les configurations N°7 et 8, la vitesse du gaz est importante, mais on ne parvient pas à diminuer le débit de gaz.

En conclusion, l'efficacité de l'aération est pilotée à la fois par la vitesse du gaz, le caractère local de l'injection et la position de la canne.

Pour pouvoir mettre en évidence l'efficacité des tubes droits, retenus comme cannes d'injection selon l'invention et qui permettent un soufflage local tout en autorisant des vitesses locales de gaz importantes, les inventeurs ont cherché à définir des paramètres adimensionnels préférés.

Ainsi, si on définit C comme la côte du plan de sortie du trou de soufflage de gaz par rapport au plan de sortie du cône d'injection de poudre et H comme la hauteur du cône entre son ouverture d'entrée et celle de sortie, alors on peut définir pour chaque géométrie de cône, le paramètre adimensionnel H* comme suit:

$$H^* = \frac{C}{H}$$

H* est donc représentatif de la position de l'injection du gaz dans le cône.

Pour représenter l'efficacité de soufflage de gaz, on utilise le paramètre adimensionnel R* suivant:

$$R^* = \frac{V_i}{V}$$

où $V_i$ représente la vitesse moyenne du gaz en sortie de trou(s) de soufflage et V la vitesse qu'aurait le gaz, à débit identique, s'il était injecté/soufflé en sortie du cône d'injection de poudre. Pour un débit de gaz donné, plus l'injection est locale et plus le rapport R* est grand.

A partir de l'expression du débit massique de gaz, R* peut également s'écrire sous la forme :

$$R^* = \frac{D^2}{d^2}$$

où D est le diamètre de sortie du cône d'injection de poudre et d le diamètre de trou de soufflage du gaz (ou un diamètre équivalent si le gaz est injecté par plusieurs trous).

L'efficacité d'un tube droit selon l'invention repose donc sur des valeurs appropriées, à la fois pour R* et pour H*. Cette contrainte peut se traduire par l'introduction d'un paramètre supplémentaire P qui représente le produit de H* par R* :

$$P *= H^*.R^*$$

Les valeurs de H* et de R* obtenues pour les différentes configurations précédentes sont représentées dans le tableau 2 ci-dessous.

TABLEAU 2

| Configurations N° | Débit gaz (Nm³/h) | V (m/s) | P (mm) | Vi (m/s) | H* | R* | P* |
|---|---|---|---|---|---|---|---|
| 1 | 0,4 | 2,5 | 150 | 93,2 | 0,52 | 37,87 | 20 |
| 2 | 0,6 | 3,7 | 165 | 14,8 | 0,57 | 4,00 | 2 |
| 3 | 0,8 | 4,9 | 200 | 9,9 | 0,69 | 2,00 | 1 |
| 4 | 0,8 | 4,9 | 235 | 9,9 | 0,81 | 2,00 | 2 |
| 5 | 0,8 | 4,9 | 235 | 9,9 | 0,81 | 2,00 | 2 |
| 6 | 0,6 | 3,7 | 130 | 35 | 0,45 | 9,48 | 4 |
| 7 | 0,9 | 5,5 | 265 | 52,5 | 0,91 | 9,48 | 9 |
| 8 | 0,8 | 4,9 | 160 | 86,8 | 0,55 | 17,63 | 10 |

De ce tableau 2, on peut constater que pour la configuration préférentielle N°1, de tube droit qui permet une injection axiale à partir d'un trou correspondant au diamètre interne de 1,3 mm, les valeurs, H* = 0.52 et R*= 38. Le produit P* est égal à 20.

Pour les deux autres configurations retenues N°2 et N°6, les valeurs de H* sont respectivement égales à 0,57 et 0,45 et les valeurs de R* respectivement égale à 4 et 9,5. Les valeurs du produit P* sont égales à 2 et 4.

De ce tableau 2, on peut donc en conclure que les gammes de valeurs préférées des paramètres adimensionnels pour les configurations N°1, 2 et 6 selon l'invention, sont les suivantes :

- H* compris entre 0,45 et 0,57 ;
- R* compris entre 4 et 40 ;
- P* compris entre 2 et 20.

On peut noter que pour une canne d'injection selon la configuration 8, les valeurs numériques des paramètres R*, H* et P* indiquées dans le tableau 2, sont dans les gammes préférées ci-dessus. Mais, comme déjà indiqué, une canne selon la configuration N°8 ne permet pas de réaliser une injection localement dans le cône d'injection, ce qui limite l'efficacité du soufflage de gaz.

Les essais réalisés ont donc permis de mettre en évidence qu'un tube droit 4 d'injection d'un gaz axialement ou radialement à la même côte par rapport à l'ouverture de sortie du cône (configurations N°1, 2 et 6) permettent de considérablement augmenter à la fois la vitesse de la poudre même sous un faible débit de gaz, et la fraction volumique solide de poudre en sortie de cône d'injection.

En reprenant l'exemple de la configuration N°1, pour un débit massique de solide de 50 kg/h, l'invention permet d'atteindre des vitesses de particules de poudre de l'ordre de 2,5 m/s dans un cône d'injection de diamètre D de sortie 8 mm et pour un débit de gaz de 0,4 Nm$^3$/h. A titre de comparaison, pour une injection de poudre en mode purement gravitaire (sans gaz) dans le même injecteur sous forme de tronc de cône, les vitesses atteintes sont de l'ordre de 0,5 m/s, soit une augmentation d'un facteur 5 dans le cas de cette configuration N°1.

Les fractions volumiques solides atteintes par la configuration N°1 sont également augmentées par rapport à une injection purement gravitaire. Ainsi, on obtient des fractions de l'ordre de 20 %, soit 5% de mieux que ce que l'on atteint en mode d'injection purement gravitaire.

REFERENCES CITEES

[1]: PAPAZOGLOU, C.S., PYLE, D.L., 1970. "Air-Assisted Flow from a Bed of Particles." Powder Technology 4, 9-18.

[2]: DE JONG, J.A.H., HOELEN, Q.E.J.J.M., 1975. "Cocurrent Gas and Particle Flow During Pneumatic Discharge from a Bunker through an Orifice." Powder Technology 12, 201-208.

**Revendications**

1. Système (1) d'alimentation en poudre en phase dense comportant :

   - un dispositif de dosage (2), adapté pour doser la poudre selon un débit moyen donné;
   - un dispositif d'injection (3) par gravité de la poudre sous la forme d'un tronc de cône, agencé en dessous du dispositif de dosage de sorte à recevoir par gravité la poudre dosée selon le débit moyen donné ;
   - un tube de soufflage de gaz (4), le tube étant droit et présentant à son extrémité inférieure, soit un trou (41) débouchant suivant son axe, soit une pluralité de trous (42) débouchant radialement à l'axe du tube sensiblement à la même côte longitudinale (P) de celui-ci; le tube droit étant agencé dans le tronc de cône avec son axe longitudinal X confondu avec celui du tronc de cône, de sorte à pouvoir injecter localement un gaz par le(s) trou(s) dans le débit de poudre tombant par gravité dans le cône d'injection.

2. Système d'alimentation (1) selon la revendication 1, dans lequel le paramètre adimensionnel H* est compris entre

$$H^* = \frac{C}{H},$$

0,45 et 0,57, H* étant défini comme étant le rapport suivant :     dans lequel C est la côte du plan de sortie du trou de soufflage de gaz par rapport au plan de sortie du cône d'injection de poudre et H la hauteur du cône entre son ouverture d'entrée et celle de sortie.

3. Système d'alimentation (1) selon la revendication 1 ou 2, dans lequel le paramètre adimensionnel R* est compris

$$R^* = \frac{D^2}{d^2},$$

entre 4 et 40, R* étant défini comme étant le rapport suivant : dans lequel D est le diamètre de sortie du cône d'injection de poudre et d le diamètre de trou axial (41) de soufflage du gaz ou le diamètre équivalent des plusieurs trous radiaux (42) de soufflage du gaz.

4. Système d'alimentation (1) selon la revendication 2 en combinaison avec la revendication 3, dans lequel le produit P* entre H* et R*, P* = H*.R*, est compris entre 2 et 20.

5. Système d'alimentation (1) selon l'une des revendications précédentes, le trou débouchant suivant l'axe du tube droit présentant un diamètre égal à celui intérieur du tube de soufflage.

6. Système d'alimentation (1) selon l'une des revendications 1 à 5, le tube droit de soufflage de gaz comprenant trois trous équi-répartis angulairement à 120° l'un de l'autre.

7. Installation de conversion thermochimique comprenant le système selon l'une quelconque des revendications précédentes et un réacteur de gazéification agencé en aval du système selon l'une quelconque des revendications précédentes.

8. Installation selon la revendication 7, destinée à convertir de la poudre de biomasse, le réacteur étant un réacteur de type à flux entraîné.

9. Procédé de fonctionnement du système selon l'une des revendications 1 à 6, comprenant les étapes suivantes :

   a/ on amène une poudre dosée par le dispositif de dosage, dans le cône d'injection, de sorte à ce qu'elle tombe par gravité dans ce dernier ;
   b/ on injecte simultanément à l'étape a/ depuis l'extérieur du cône, un gaz de soufflage, de préférence un gaz neutre, dans le tube droit de sorte que le gaz soit injecté en co-courant de la poudre qui tombe par gravité, soit selon l'axe du cône, soit radialement à ce dernier.


**Patentansprüche**

1. System (1) zur Versorgung mit Pulver in dichter Phase, aufweisend:

   - eine Dosiervorrichtung (2), die geeignet ist, das Pulver gemäß einem gegebenen mittleren Massenstrom zu dosieren;
   - eine Einleitungsvorrichtung (3) zum Einleiten des Pulvers per Schwerkraft in Form eines Kegelstumpfs, die unter der Dosiervorrichtung angeordnet ist, so dass sie per Schwerkraft das gemäß dem gegebenen mittleren Massenstrom dosierte Pulver aufnimmt;
   - ein Gaseinblasrohr (4), wobei das Rohr gerade ist und an seinem unteren Ende entweder ein Loch (41) aufweist, das entlang seiner Achse mündet, oder eine Mehrzahl von Löchern (42), die radial zur Achse des Rohrs im Wesentlichen auf derselben Längshöhenkote (P) von diesem münden, wobei das Rohr in dem Kegelstumpf so angeordnet ist, dass seine Längsachse X mit der des Kegelstumpfs zusammenfällt, so dass ein Gas lokal durch das Loch bzw. die Löcher in den per Schwerkraft in den Einleitungskegel fallenden Pulvermassenstrom eingeleitet werden kann.

2. Versorgungssystem (1) nach Anspruch 1, bei dem der dimensionslose Parameter H* zwischen 0,45 und 0,57 beträgt,

$$H^* = \frac{C}{H},$$

wobei H* als das folgende Verhältnis definiert ist: H* worin C die Höhenkote der Austrittsebene des Gaseinblaslochs in Bezug auf die Austrittsebene des Pulvereinleitungskegels ist und H die Höhe des Kegels zwischen seiner Eintritts- und der Austrittsöffnung.

3. Versorgungssystem (1) nach Anspruch 1 oder 2, bei dem der dimensionslose Parameter R* zwischen 4 und 40 beträgt, wobei R* als das folgende Verhältnis definiert ist: $R^* = \frac{D^2}{d^2}$, R* worin D der Austrittsdurchmesser des Pulvereinleitungskegels und d der Durchmesser des axialen Gaseinblaslochs (41) oder der äquivalente Durchmesser der mehreren radialen Gaseinblaslöcher (42) ist.

4. Versorgungssystem (1) nach Anspruch 2 in Kombination mit Anspruch 3, bei dem das Produkt P* aus H* und R*, P* = H*.R*, zwischen 2 und 20 beträgt.

5. Versorgungssystem (1) nach einem der vorhergehenden Ansprüche, wobei das entlang der Achse des geraden Rohrs mündende Loch einen Durchmesser aufweist, der gleich dem Innendurchmesser des Einblasrohrs ist.

6. Versorgungssystem (1) nach einem der Ansprüche 1 bis 5, wobei das gerade Gaseinblasrohr drei Löcher umfasst, die winkelgleich um 120° voneinander verteilt sind.

7. Anlage zur thermochemischen Umwandlung, die das System nach einem der vorhergehenden Ansprüche umfasst und einen Vergasungsreaktor, der stromab des Systems nach einem der vorhergehenden Ansprüche angeordnet ist.

8. Anlage nach Anspruch 7, die dazu bestimmt ist, Biomassepulver umzuwandeln, wobei der Reaktor ein Flugstromreaktor ist.

9. Verfahren zum Betreiben des Systems nach einem der Ansprüche 1 bis 6, umfassend die folgenden Schritte:

a/ man führt ein von der Dosiervorrichtung dosiertes Pulver dem Einleitungskegel zu, so dass es per Schwerkraft in diesen fällt;
b/ man leitet gleichzeitig zu Schritt a/ von außerhalb des Kegels ein Einblasgas, bevorzugt ein neutrales Gas, in das gerade Rohr ein, so dass das Gas im Gleichstrom mit dem per Schwerkraft fallenden Pulver eingeleitet wird, entweder entlang der Achse des Konus oder radial zu dieser.

**Claims**

1. System (1) for supplying dense phase powder comprising:

- a dosing device (2), suitable for dosing the powder according to a given average flow rate;
- a device (3) for injecting the powder by gravity in the form of a truncated cone, arranged under the dosing device so as to receive, by gravity, the powder dosed according to the given average flow rate;
- a gas blowing tube (4), the tube being straight and having, at its bottom end, either a hole (41) emerging on its axis, or a plurality of holes (42) emerging radially to the axis of the tube substantially at the same longitudinal elevation (P) thereof; the straight tube being arranged in the truncated cone with its longitudinal axis X coinciding with that of the truncated cone, so as to be able to locally inject a gas through the hole(s) into the flow of powder falling by gravity in the injection cone.

2. Supply system (1) according to Claim 1, wherein the adimensional parameter H* lies between 0.45 and 0.57, H* being defined as being the following ratio: $H^* = \frac{C}{H}$, H* in which C is the elevation of the output plane of the gas blowing hole with respect to the output plane of the powder injection cone and H is the height of the cone between its inlet aperture and its outlet aperture.

3. Supply system (1) according to Claim 1 or 2, wherein the adimensional parameter R* lies between 4 and 40, R* being defined as being the following ratio: $R^* = \frac{D^2}{d^2}$, R* in which D is the outlet diameter of the powder injection cone and d is the diameter of the axial gas blowing hole (41) or the equivalent diameter of the several radial gas blowing holes (42).

4. Supply system (1) according to Claim 2 in combination with Claim 3, wherein the product P* between H* and R*, P* = H*.R*, lies between 2 and 20.

5.  Supply system (1) according to one of the preceding claims, the hole emerging on the axis of the straight tube having a diameter equal to the internal diameter of the blowing tube.

6.  Supply system (1) according to one of Claims 1 to 5, the straight gas blowing tube comprising three holes equally distributed angularly at 120° from one another.

7.  Thermochemical conversion installation comprising the system according to any one of the preceding claims and a gasification reactor arranged downstream of the system according to any one of the preceding claims.

8.  Installation according to Claim 7, intended to convert biomass powder, the reactor being a driven flow type reactor.

9.  Method for operating the system according to one of Claims 1 to 6, comprising the following steps:

    a/ a powder dosed by the dosing device is brought into the injection cone, such that it falls by gravity therein;
    b/ simultaneously with step a/, from the outside of the cone, a blowing gas, preferably a neutral gas, is injected into the straight tube such that the gas is injected co-current with the powder which falls by gravity, either along the axis of the cone, or radially thereto.

Fig.1

Fig.2

Fig.3

Fig.4

Fig.5

**Fig.6**

4

42

42

8

**Fig.7**

**Fig.8A**

9

**Fig.8**

9

42

90

42

90

$\alpha$

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5129766 A
- EP 2017072970 W
- US 3713564 A
- JP 2007091242 B
- US 4943190 A

**Littérature non-brevet citée dans la description**

- **PAPAZOGLOU, C.S. ; PYLE, D.L.** Air-Assisted Flow from a Bed of Particles. *Powder Technology,* 1970, vol. 4, 9-18
- **DE JONG, J.A.H. ; HOELEN, Q.E.J.J.M.** Cocurrent Gas and Particle Flow During Pneumatic Discharge from a Bunker through an Orifice. *Powder Technology,* 1975, vol. 12, 201-208